# EUROPEAN PATENT APPLICATION

(11) **EP 3 745 255 A1**
(43) Date of publication of application: **02.12.2020**
(21) Application number: 19744056.3
(22) Date of filing: 20.01.2019
(51) Int. Cl.: G06F 8/00

(54) **NOVEL COMPUTER PROGRAMMING LANGUAGE**

(30) Priority: 26.01.2018 CN 201810075131
(71) Applicant: Baiyete (Shanghai) Software Technology Co., Ltd, Pudong, Shanghai 201203 (CN)
(72) Inventor: ZHANG, Jihui, Shanghai 201203 (CN)
(74) Representative: Schollweck, Susanne
(86) International application number: PCT/CN2019/072449
(87) International publication number: WO 2019/144852

(57) **Abstract**

A new computer programming language, that is DT language, is disclosed. The language comprises the unique features in this programming language and their realization methods. Nowadays, data process is becoming more and more widely used in various industries and all walks of life. Using computer programming languages that created decades ago to develop software or to process data in various industries now is too cumbersome, too inefficient, and too difficult to do post-maintenance after development; there are too many bugs, the development time cycle is too long, and the implementation rate is too low. This invention initiated "Datalization Programming, Structuration Programming, Configuration Programming", and realized rapid and efficient software production and data processing through newly invented data types and the work done for these data types by this language. Developers or designers can use the Client-end programming tool provided by this language to configure and code through newly added data types. After configuration and coding, it will be interpreted and executed by the Client-end, Browser-end or Server-end of this language; it also can be interpreted to other languages by the Server-end of this language.

## Description

### FIELD OF THE DISCLOSURE

The present invention is a new programming language, namely "DT Programming Language". In some embodiments thereof, especially a new programming language tool for improving programming efficiency, software development and design efficiency and data processing efficiency.

### BACKGROUND

Current mainstream computer programming languages were created decades ago, and most of them are far behind our present era. For example: C++ in 1983; Java in 1995; C# .Net in 2000; Python in 1991. Even the latest programming language C# .Net has been launched 17 years ago. When people developed these programming languages at that time, the computer hardware and software technologies are still in a very preliminary development stage, the extensive application of data in various industries has not been carried out. As the time goes by, with the progress of computer software and hardware, data process is becoming more and more widely used in various industries and all walks of life. Using computer programming languages that created decades ago to develop software or to process data in various industries is too cumbersome, too inefficient, and too difficult to do post-maintenance after development; there are too many bugs, the development time cycle is too long, and the implementation rate is too low. Even if the software has been successful implemented, with the time going many users have discarded it due to the changing demands. At present, using the current mainstream programming language to develop software is hard to keep pace with the changing needs of enterprises. At that time, those programming language design masters did not realize these problems, because at that time the Data Era (DT Era) has not yet come.

### SUMMARY

### Technical Problem:

Nowadays, the processing efficiency of all current mainstream computer programming languages is very low and there are a lot of Bugs. The present invention greatly improves production efficiency and productivity. The present invention is a new computer programming language, that is, DT Programming Language. Unlike traditional computer programming languages, the present new programming language encapsulates all data types with "library" data types and "table" data types, and it initiated "Datalization Programming" method, which is more conducive to data analysis, data mining, and artificial intelligence. The newly invented data types such as "Identity Data Type, Relation Data Type, Role Data Type, Scene Data Type, Skill Data Type, Data Flow Type..." etc. have been added into the present new programming language. The new programming language has realized rapid and efficient software production and data processing through the newly invented data types and the work has been done for these data types by this new programming language.

### Technical Solution:

At present, all current mainstream computer languages are stand-alone version programming languages, while the present new programming language is a network-version programming language. Client-ends are at the front desk, and there are a large number of cloud-servers at the backstage to support them. The user codes, writes and develops on the client-end, and then uploads it to the cloud-server of this programming language. The server will interpret the application codes, and using data mining method, machine learning method, and make the comparison with the data from the whole network, and then evaluate the best method and the worst method or the practice which need to be optimized, thus prompting the users to improve the coding and development, or using the AI to provide a better coding or writing or practice for the users. Developers or designers can configure and code by using the client-end programming tool provided by this new programming language, and the newly added data types. Then it can be interpreted by the client-end, browser-end or server-end of this programming language, and it can also be interpreted by the server-end of this language to other programming languages, such as Java, C# .Net, JavaScript, C++, Python etc.
New features of the present programming language are as follows:
1. Better at configuration than manual coding, because the configuration is simpler and easier to use, and with less bugs.
2. All data types are encapsulated in the form of "library" data type and "table" data type, where the "library" and the "table" are classified.
3. New Data Types: A. Identity Data Type; B. Relation Data Type; C. Role Data Type; D. Scene Data Type; E. Skill Data Type; F. Data Flow Type; G. Configuration Data Type and User Data Type; H. Verification Data Type; I. Grad New Grid Control Data Type; and other unique Data Types in this language.

### a) Identity Data Type

The identity data type includes the information of all scenes. The identity information needs to be described the role it plays in each scene when it is defined. For example, a table: It is a table in the database. It is a grid control in the front interface when it acts as a master, that is, while it is in the independent management interface. And it is a drop-down control or a tree control etc when it is called by other interfaces (when it acts as a guest)...

The identity data type also includes skill items, which are also divided into system skill items or user skill items. System skill items are some general skills items provided by this programming language, the system environment is responsible for interpretation and execution, or translation. User skill items are generally business-oriented or service-oriented, which is written or configured by the developers using this new programming language according to actual needs.

The principle of identity data type design is only related to itself and all its inclusion items.

### b) Relation Data Type

The relation data type describes the relation between two identity items in various scenes, such as below two identities: Identity A, Identity B, they are one-to-many relation in the database, the Identity A stands one, and the identity B stands multiple. In the UI interface, when the Identity A record changes (the change items can be configured by the developer using this new programming language), then the identity B will refresh operation.

### c) Role Data Type

The role data type describes actions or synergies between two or multiple identity items. When an identity item needs to collaborate with other identity items to complete a task, roles are required. Role items are defined on the basis that the identity item and the relation item are both clear, that is, relation item should be defined first and then the role is defined, when defining a role. For example, Identity A and Identity B: There is a one-to-many relation between them, sometimes the user may use them on the interface. For the Identity A, if the Identity A needs to search the information of the Identity B or the Identity A needs to count the information of the Identity B, in this case Identity A needs to use the role. Role item includes role skills.

### d) Scene Data Type

The scene data type defines each running point of the software, such as: database indicates the database-end, client indicates the client-end, server indicates the server-end, browser indicates the browser-end, and mobile indicates the mobile-end (or phone-end or pad end). There are different definitions of members in each different scene.

### e) Skill Data Type

The skill data types are divided into identity skill items and role skill items, which are used for the action of identity items and the action of scene items respectively. Skill data types include scene information, because one skill may cross multiple-scenes.

### f) Data flow data type

The data flow type defines the data flow or the destination and the source of data. If a table-level field item needs to be defined, then it is necessary to define the source of data of this field. There are several sources classifications as follows:
Everyone: From any user input or selection;
Design: From the design user input or selection;
Debug: From debugging user input or selection;
Install: From the installation user input or selection;
User: From the final operational user input or selection;
UserSelect: From the user selection and indicate the item to be selected;
Table: From the table or other identity items, and specify other table items;
Field: From the field in the table;
Record: From one record in the table;
Function: From the function, and indicate the function name;
Interface: From the interface;
Instance: From the instance;
Machine: From the machine or equipment;
Other: From other items.

### g) config Configuration Data Type

The configuration data types are divided into the following levels, indicating which one will configure them separately.
design: Designer or developer;
debug: Tester;
install: Installer;
user: User;
everyone: Anyone;

### h) Verification Data Type

Integer: Integer item, including whether the null option is allowed, minimum values, maximum values;
Decimal: Integer item, including whether the null option is allowed, minimum values, maximum values, and decimal numbers;
Number: Number item, including whether the null option is allowed, minimum length, and maximum length;
String: String item, including whether the null option is allowed, minimum length, maximum length, allowed items, rejected items, regular expressions, custom function items;
Datetime: Date item, including whether the null option is allowed, minimum date, maximum date, date format;
File: File item, including whether the null option is allowed, minimum values, maximum values;
"businessCheck": Business logic check item.

### i) Grad New Grid Control Data Type

The new grad grid control data type differs from the traditional control in that it adds, the parameter area, the display area (view area), and the edit area, in addition to the normal grid display functions. These three areas are combined into one control, and the interaction between them is coordinated or interpreted by this new programming language. The parameter area provides a grid control for filtering while extracting data. The display area displays details when a user clicks a row of records of grid control. The edit area displays for the user the content details which need to be edited after the user clicks a button. The display area and the edit area can be combined together. Where each internal item of the grad grid, each internal item of the parameter area, each internal item of the edit area, and each internal item of the display area can be configured by the designer or by the final user.

### Technical effect

At present, all the current mainstream computer languages are created decades ago. All of them are stand-alone versions programming languages, and the development efficiency of which is very low, far from meeting the current production needs, and producing a lot of bugs. While this new programming language is based on new scientific theories and new scientific technologies. This new programming language is a "Relation-Oriented" Programming Language (ROP), is a Data-Flow based Programming Language (DPL, Datalization Programming Language), is a "Network" based Version Programming Language (NVP). Client-ends are at the front-desk, and there are a large number of cloud-servers in the background to support the client-ends. The users do the programming, coding and development at the client-ends, and then upload it to the cloud-servers of this programming language. The servers will interpret the application codes, and using data mining, machine learning method, and make the comparison with the data from the whole network, and then evaluate the best method and the worst method or the practice which need to be optimized, thus prompting the users to improve the coding and development. Or use the "AI" method to provide a better coding or writing or practice for the users, which can directly improve the production efficiency and productivity.

### DETAILED DESCRIPTION

The present programming language realized system library data type, system table data type, database data type (the database in this document refers to The Collection of Unique Data Types of this Programming Language, not the traditional SQL database, if not specified), and data table data type (the data table in this document refers to The Collection of Unique Data Types of this programming language, not the traditional SQL data tables, if not specified) as follows:

```
 bydatabase by
 {
       //System basic data types
       system sheet object [ identity item, role item ] (
       string name [identity item, role item]
       , string parent [identity item, role item]
       , string comx [identity item, role item]
       , string summery [identity item, role item]
       , string tName [identity item, role item] )
       {
                       { ...... }
                       { int , ,, " System basic data type" , struct }
                       { long ,,, " System basic data type" , struct }
                       { string ,,," System basic data type" , class }
                       { ...... }
       }
 }
```

In the above example, "bydatabase" is the system library data type, "by" is the name of the library, the system library is only stored in the system memory and is interpreted or translated by this programming language. It can be directly referenced or instantiated while it is not necessary to specify the "object" table in other libraries. "System" indicates that this is a system table data type. The difference between the system table and the data table is that the data table is only stored in the database, and all records are not specific, while it can be dynamically added, deleted or updated; but the system table is stored within the environment of this programming language, it will be installed into the environment memory list at the first startup. The system table in the system library can't be stored in the database, while the system tables in the database can be stored in the database.

### A. Realization of System Library data type and Database data type

For the Current mainstream programming languages such as c# .net:

```
 namespace byt
 {
  public class Class 1
  {
    public string name { get; set; }
    }
 }
    Use the namespace to name "byt" to classify the code, all the content items in the "byt"
    brackets are placed under the name of "byt";
    Another example, java:
    package test;
    public class abc {
    }
    Use the package to name "test" to classify the code. All the following content are placed
    under the name of the "test".
    Traditional languages use only one modifier or even not use any modifier at all.
    In the present programming language, using two modifiers "bydatabase", "database" for
    classification, as defined below:
    bydatabase by
    {
    // It places all system basic types, language-level content.
    }
    database stock
    {
       // It places all contents defined or configured by the user.
 }
```

After the actualization of the definition, this programming language will perform different steps for the above two definitions. If it is "bydatabase" in this programming language, it will generate one-to-one corresponding lists, load to the memory, and provide verification work and so on. If it is a database table, in addition to execution steps of "bydatabase" item, it also generates corresponding all the system tables modified with the system sheet through the SQL language in the corresponding actual database (where actual database refers to the current some of the mainstream database such as: MS SQL server, Oracle, MySQL and so on).

All data types in this language are all placed in the system library of "systembaseby". The program data written or coded by the user is uniformly placed into the "database" modified by database, and the name of which can be defined by the user.

### B. Realization of System table data type and data table data type

### 1. Realization of system table data type

```
 database by
 {
       system sheet cmd[relation item, identity item, role item] (string name[relation item,
       identity item, role item], string summery)
       {
       {config, "Configuration keyword "}
       {constraint, " Constraint item" }
       }
       }
```

In the above "bylibrary" modified by database, there is a CMD table. The "system" is a system table, the table is uniformly represented by the keyword sheet, and the CMD is the table name. The content in the "[]" is the reference information of "Relation item, Identity item, Role item". For the description of the "Relation Item, Identity Item, Role item ", please refer to the "Relation Item, Identity Item, Role item" section of this document. The content in the "()" is the detail field header of the system table, one of which is the string type name, another one is the string type summery. The following "{config, "configuration keywords" }" in the " { }" is the record item of the table. The record item can be added, deleted, updated or changed before running compilation or interpretation, but it can't be added, deleted, updated or changed or modified during the running time. It means that the record item in the system table only is allowed to be modified by the programmers before the program starts to run, it is not allowed to be added, deleted or changed or modified by SQL or other method during the running time or execution time.

Where, the content in the " []" after CMD is the description of "relation item, identity item, role item" related to the table level. And the content in the "[]" after the name in "()" is the description of "relation item, identity item, role item" related to the field member level, and it represents an array if the " []" is placed after the string, which is the same meaning as in other programming languages.

### 2. Realization of data table type

There are two realization methods to actualize the call between the system table and the data table during the running time, as follows:
1. After completion of writing or coding for the first time, the user clicks interpretation or execution button, this programming language will connect to the corresponding database for an addition operation, insert the system tables defined by the current user in the current database row by row, in this case the system table not only exists in the development environment, but also in the database, thus actualizing that the data table in the database can reference the system table in the database, and then actualize that the system table is also in a database. Then the system table can be linked into a list through SQL relation operation, thus actualizing that the data table can call the system table.
2. When the user calls, this programming language can do the interpretation dynamically; the user can directly reference the system table in the data table in this programming language. When the code is handed over to the server-end or the client-end for execution, the user-specified data items are taken out from the database firstly. And for the items in the system table referenced by the user, this programming language will call their originally defined information to traverse row-by-row and add them to the current data table item. Or when the code is interpreted to other programming language's code, if the items in the system table are called by the data table, which will be traversed row-by-row and added to the system table items called by the user in this programming language, thus actualizing the system table can be called without SQL database storage.
3. Realization of cache table type
   The cache table is only used to store data of other tables temporarily. The data in the cache table must come from other tables. Only one reference item of a record or one reference item of a table to be recorded, as follows:

   ```
/* System environment table*/
       cache sheet environment [ identity .cache ] (
       string tableName [ identity.refTable ]
       , string fieldName [ identity.refField ]
       , object ID [ identity.refRecord ]
       , string summery [ identity. summery ] )
       {
                       { language , name , cn , " Default Simplified Chinese" }
 }
```

The "tableName" is the table name of other tables, the "fieldName" is the field name of other tables, the ID is the record item of other tables, the "summery" item is the description item, and the cache table is modified by cache, where "{ language , name , cn , " default simplified Chinese " } ", is an example record item.

### C. Realization of object and function

### 1. Realization of object

The realization of an object is including three tables: the "object" table, the "object.state" table, and the "object.attribute" table. Together, these three tables describe the objects that are included within all systems in this programming language and the objects added by the user. Each time when an object is added, the name of the object, parent object, combination item, description item, and the record of identity item are added to the object table. The "object.state" table includes operations that can be performed on the object table. The "object.attribute" table includes the attributes (properties) owned by the objects in each object table.

```
 global system sheet object [identity item, role item]
 (string name [identity item, role item],
 string parent [identity item, role item],
 string comx [identity item],
 string summary [identity item],
 string tName [identity item])
 { ...
       { int , ,, " system basic data type" , struct }
       { table.rows , table , include , " system basic data type" , class }
 ...
 }
```

The objects of system are placed in a global system table (sheet) named "object". The content in "[]" is the reference information of "identity item, role item". For the description of "Identity Item and Role Item", please refer to the "Identity Item and Role Item" section of this document. The content in "()" is the detail field header of the system table. The first item is the string type "name item" (name), which is used to describe the name of the object. The second item is the string type "parent item", used to describe which parent object the object is inherited from or included within. The third item is the string type "combination item", used to describe whether the relation of the object and the parent object is inherited from or included within. The fourth item is the string type "summary item", used to describe which data type the object belongs to. The fifth item is the "type" item of string type, which describes the type of the object (class, reference type/structure, value type/enumeration, value type/interface etc). The content in "{ }" is a part of the record item in the table. The record items can be added or deleted or modified before running compilation or interpretation, while the addition, deletion, and modification operations are not allowed during the running time or operation time, that is, the record items of the system table are only allowed to be modified by the programmer before the program is started to run, and is not allowed to be added or changed by SQL or other method during runtime or execution. If there is no any content in a field of a record, such as { int , , , "system basic(underlying) data type", struct }, it means that this int object has no parent and no inheritance or inclusion of other objects.

```
 system sheet object.state [Identity item, Role Item]
 (string belong [Identity Item],
 string name[Identity Item],
 string summary [Identity Item])
 {
 ...
       {button.add , add , "addition"}
       {button.add , complete , "completion"}
       ...
 }
```

The "object.state" table is a detail table of object, used to describe the objects for adding, deleting, modifying and querying the object table. The content in "[]" is the reference information of "Role Item, Identity Item". For the description of the "Role Item and Identity Item", please refer to the "Role Item and Identity Item" section of this document. The content in "()" is the detail field header of the table. The first item is the string type "Belong Field", used to describe which object the operation belongs to. The second item is the string type "Name Field", used to describe the name of the operation (addition / deletion / change / query / check / modification etc). The third item is the string type "Summary Field" (description Field), used to describe the action of the operation. The content in "{}" is a part of the record item in this table.

```
 system sheet object.attribute [Identity Item, Role Item]
 (string belong [Identity Item],
 string name [Identity Item],
 object obj,
 bool isStatic,
 bool isPublic
 )
 {
 ...
       {int, max, int, true, true}
       {dataview, rowFilter, string, false, true}
       ...
 }
```

The "object.attribute" table is the subordinate table of the object, used to describe the attributes possessed by each object. The content of "[]" is the reference information of "Role Item, Identity Item". For the description of "Role Item and Identity Item", please refer to the "Role Item and Identity Item" section of this document. The content in "()" is the detail field header of the table. The first item is the string type "Belong Field", used to describe which object the attribute belongs to. The second item is the string type "Name Field", used to describe the name of the attribute. The third item is the Object type "Object item", used to describe the type of the attribute. The fourth item is the bool type "isStatic" field (whether the attribute is static), used to describe whether the attribute is a static attribute of the object to which it belongs. The fifth item is the bool type "isPublic" field (whether it is public), used to describe whether the attribute can be called by an external method. The content in "{}" is a part of the record item in this table.

### 2. Realization of function

```
system sheet method(
       string belong [Identity Item],
       string name,
       string[] paraType [Identity Item],
       string [] paraName,
       string returnType [Identity Item],
       bool isStatic,
       string body,
       string summary [Identity Item]
       )
       { ...
       {nodes, add, [node], [treeNode], int, false, {by}, {Add a node to the collection, return
       the node index } }
       {nodes, clear, [], [], void, false, {by}, {Delete all elements in the collection}}
       
...
       }
```

The methods in the system are stored in a system table (sheet) named "Method". The content in "[]" is the reference information of "Identity Item, Role Item". For the description of Identity Item and Role Item, please refer to the "Identity Item and Role Item" section of this document. The content in "()" is the detail field table header of the system table. The first item is the string type "belong item", used to describe which object the method belongs to. The second item is the string type "name item", used to describe the method's own name. The third item is the string [] (string array) type "paraType" (parameter type) item, used to describe the type of each parameter included within the method, and is recorded in the string array in order. The fourth item is the string [] (string array) type "paraName" (parameter name) item, used to describe the name of the formal parameter included within the method, and is recorded in the string array in order. The fifth item is the string type "returnType" item, used to describe the return type of the method. The sixth item is the bool type "isStatic" (whether the method is static) item, used to describe whether the method is static method. The seventh item is the string type "body" (method body) item, used to describe the method body of the method. The eighth item is the string type "summary" (description) item, used to describe the specific functions of the method.

**In the examples included in the following D, E, and F sections, the table A and table B are quoted here:**

```
 System sheet A [ identity.dictionaryRecord, relation.recordToField.record, role.
 recordActualize.record ](
 string f1 [ identity.ID, relation.partner.A, role.valueDisplay.value ]
 , string f2 [ identity. summery, relation.partner.B, role.valueDisplay.display ] )
 {
 {id1, "First Record" }
 {id2, "Second Record" }
 }
 System sheet B [ identity.actualize, relation.recordToField.actualize,
 role.recordActualize.actualize ] (
 string id1 [ identity.refRecord : A.id1 ]
 , string id2 [ identity.refRecord : A.id2 ] )
 {...Content omitted...,...Content omitted...}
```

### D. Realization of Identity item (identity type)

### 1. Definition of Identity item (identity type)

The identity item (identity type) is defined in the identity table as follows:

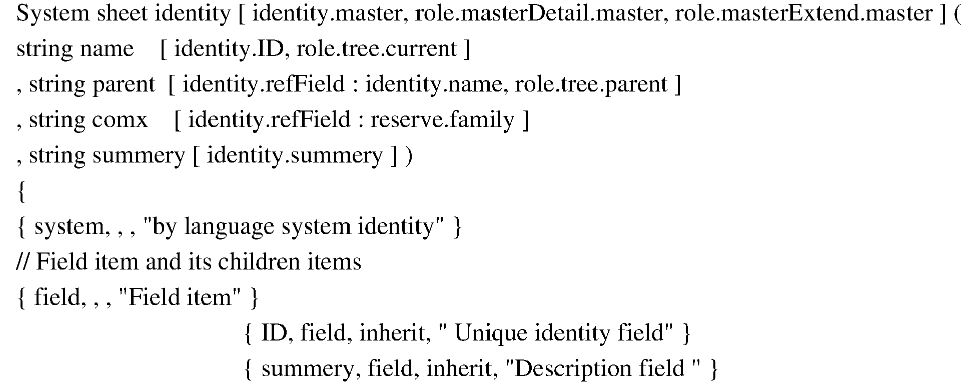

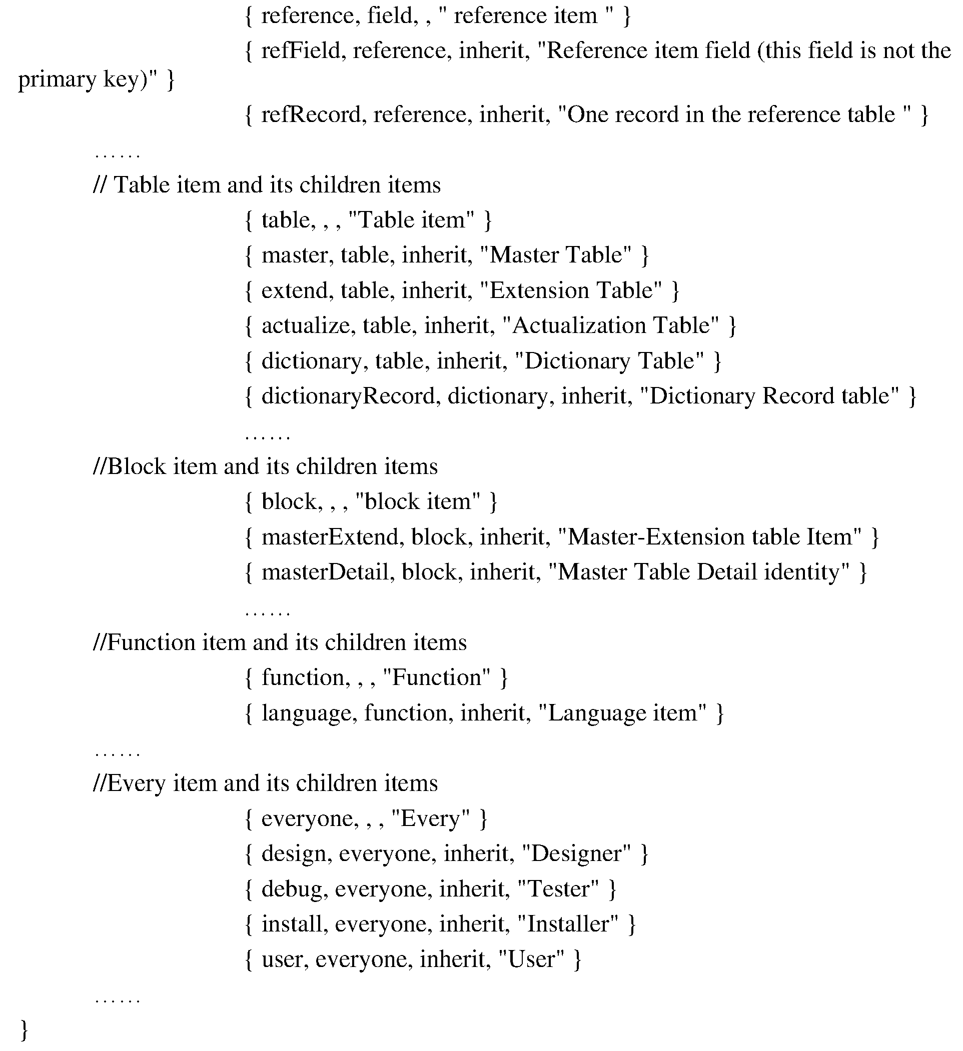

The identity items in the table are divided into table item, field item, function item, block item (module item), every item. These identity items are the root item and are inherited by the children items. These children items also can be acted as parents, inherited by its other children items, and then extended downwards in turn to form a tree-like structure. And users can expand it dynamically according to their own needs, but the user-defined identity items must inherit from system-defined identity item. Because of the inheritance relation, the children items not only possess all the features from the parent, but also possess features that the parent does not possess.

### 2. Usage of identity item (identity type)

The usage methods of identity items can be divided into two ways:
1. Add identity items in the "[]" after the table name or field name.
2. Configure them in the identity item configuration table.
   1. Add identity items in the "[]" after the table name or field name in the form of "identity. identityItemName". Take the table A as an example:
      System sheet A [ identity.dictionaryRecord ]
      It should be noted that when using the field item identity, if the parent of the item is a "reference identity item" and the reference field needs to be specified explicitly, the expression in "[]" will become "identity.identityItemName: referenceTableName.referenceFieldName", take the Field id1 and Field id2 in the table B as an example:
      string id1 [ identity.refRecord : A.id1 ]
      , string id2 [ identity.refRecord : A.id2 ]
   2. Configure the identity items in the identity configuration table, take the table A as an example:
      {A_instance, identity .dictionaryRecord, A}

If the first method is used, the system will recognize the table name or field name and the contents in the "[]" after the table or field immediately, and generate an instance name (for example, the identity instance generated by the table A is named "A_instance"), then the "instance name, identity item, table name (or field name)" three items are combined into one record which will be inserted into the identity configuration table, which is the same as the second method. If the second method is used, there is no need for the system to generate identity configuration information automatically; the user can configure it in the identity configuration table directly.

It can be seen from the above two usage methods that no matter which method the user choose, the system obtains the instantiation information of the identity item by accessing the identity configuration table in the instantiation stage. In comparison, the first method is more suitable for users to read, while the second method can save system overhead. These two methods of usage can be freely chosen by the user.

### 3. Construction of identity item

### 1). Definition of construction item

The construction item is defined in the identity construction table, as follows:

```
 system sheet identity.compose (
 string belong [ identity.refField : identity.name ]
 , string name [ identity.config ]
 , string configType [ identity.reference ] /* Declarative type, or type constraint */
 , string cName [ identity.refField : reserve.config ]
 , string roName [ identity.refField : role.detail.name ]
 , string constraint [ identity.refTreeRecord : reserve.constraint ] //constraint item
 , string summery [ identity. summery ] )
 {
         { dictionaryRecord, idField, identity.ID, design, valueDisplay.value, must, "Must
         include a field with role as value item " }
         { dictionaryRecord, summeryField, identity.summery, design, valueDisplay.display,
         must, " Must include a field with role as display item " }
         }
```

Each of the above records represents a construction item of the "language item" identity, and the meaning of each column is as follows:
Column 1: The name of identity item that needs to be constructed;
Column 2: The name of the construction item;
Column 3: The identity constraint of the construction item;
Column 4: Configuration item, that is, it requires to be manually configured by developers;
Column 5: The role constraints of the construction item;
Column 6: The constraint item, where "Must" represents "required item", "Option" represents "optional item", and "condition" represents "conditional item";
Column 7: Description information of the construction item.

All system-defined identity items or user-defined identity items must be explicitly given the corresponding construction item, and the construction items of children items contain all the construction items of the parent item. If the same construction item is defined in the child item, the child item will overwrite the same one (s) of the parent item. The construction item constrains the construction of the identity, that is, each identity must have some specific construction items in order to complete the identity construction. Besides, the users can also define the construction item for the identity item defined by themselves, in addition to the given part of the system basic class library (for the identity item, please refer to the description in the "Definition of Identity Item" section).

### 2). Configuration of the construction item

For each identity instance item in the identity configuration table, the corresponding construction items need to be configured in the identity composition configuration table, and these construction items are all from the definitions in the identity construction table. Take table A as an example:
The table identity is configured in the identity composition configuration table as follows:

```
 system sheet config.identity.compose (
 string belong [ identity.refField:config.identity.name ]
 , string composeName [ identity.refField:identity.compose.name ] // Constituent elements
 name
 , string belongTo [ identity.reference ] // to whom it is configured)
 {
 { A_instance, idField, f1 }
 { A_instance, summeryField, f2 }
 }
```

Where, Column 1 is the "identity instance name" of the table A; Column 2 is the "construction item name"; and Column 3 is the specific content indicated by the construction item. As it can be seen from the above example, the identity configuration table and the identity composition configuration table are associated with the instance name of the identity, in order that when the identity is instantiated, the identity construction item contained within the identity can be found through the instance name.

### 4. Identity item check

The identity check item is defined in the identity check table. The following is the definition of the identity check item of the table A:

```
 system sheet identity.check [ identity.extend, role.masterExtend.extend ] (
 string belong [ identity.refFieldAsID : identity.name ]
 , script body)
 {
 { dictionaryRecord,
           {
                  if(! compose.idField.isIdField)
                  {
                          popup.show("Must include the primary key item! ");
                  }
            if(!compose.summeryField.isSummeryField)
                  {
                          popup.show("Must include a description item! ");
                          }
      .....
      }
          }
 }
```

The first column is the identity item name of the table A; the second column is the check script corresponding to the identity item, where detail inside of { } is the content of the script. The writing syntax of the script is basically the same as that of other languages. The functions used in the script are provided by the system basic class library. If the user needs to check the user-defined identity items, use the functions provided by the system and write the corresponding check script according to the syntax.

The identity item check is the core part of the identity instantiation process, which is done by scripts. The corresponding relation between identity items and scripts is defined in the identity check table. The system-defined identity items are scripted by the system. The user needs to write corresponding scripts for the identity items added by the user. The script is responsible for checking the identity construction items (identity builder items) of the identity composition configuration table. Because of the inheritance of identity items, the identity check should be performed on their parents firstly when checking the identity items. Furthermore, if there are duplicate-defined construction items (builder items) in children and parents, then the identity construction item (builder item) in the child should override the duplicates in the parent when checking.

### 5. Instantiation of identity item

Instantiation is performed by the system in the "syntax check" phase, when the user configures the identity item and all the items it contains (construction item, check script...), the "syntax check" will be suspended temporarily. And the identity instantiation will start after the user has completed the configuration process. Take the identity instantiation of the table A as an example:

### 1). Source check

Find the corresponding record in the identity configuration table through the instance name of the table A identity, A_instance, as follows:

```
 {A_instance, identity .dictionaryRecord, A}
```

Check the source for its second column, i.e.the identity item, identity.dictionaryRecord.

The source check is mainly to verify whether the identity item and its parent are defined in the identity table. Take the table A as an example. The identity item and its parent are defined as follows:

```
 { table, , , "table item" }
 { dictionary, table, inherit, "dictionary table" }
 { dictionaryRecord, dictionary ,inherit, "dictionary record table" }
```

And then verify whether the root item is correct (the identity root item of the table must be a table item, and the identity root item of the field must be a field item). As it can be seen from the above definition, the identity root item of the table A is a table, that is, a table item, so it can pass the check.

### 2). Construction item Check (Builder item check)

The constraints of these construction items need to be checked before the script is executed. In this step, you can firstly find the construction items defined in the identity construction table through the identity item, "dictionaryRecord", as follows:

```
 { dictionaryRecord, idField, identity.ID, design, valueDisplay.value, must, " Must include a
 field with role as value item" }
 { dictionaryRecord, summeryField, identity.summery, design, valueDisplay.display, must, "
 Must include a field with role as display item " }
```

It can be seen that both of the construction items "idField" and "summeryField" are required items, i.e. if the identity needs to be instantiated, it must be configured in the identity composition configuration table.

Find the relevant construction item in the identity composition configuration table through the instance name, as follows:

```
 {A_instance, idField, f1}
 {A_instance, summeryField, f2}
```

It can be seen that the required items defined in the identity construction table have been configured, so you can proceed to the next step of the script check.

### 3). Script check

Find the corresponding script in the identity check table through the identity item, and the system interprets and executes the script. If the script is executed, then the identity instantiation is successful. If a popup box appears during the execution, it means the identity instantiation is failed; in this case the user needs to check the identity composition configuration table according to the content prompted by the pop-up box.

### 6. Identity item skill

The corresponding relation between the identity item and the skill is defined in the identity skill table. In addition, it also has been defined in the table that under which action the skill is called and in what identity (here the identity refers to the master identity or the guest identity) the skill is called; the child includes all the skills of the parent. The following is the definition of the "language item" identity "translation" skill:

```
 system sheet identity .skill [ identity.detail , role.masterDetail.detail ](
 string belong [ identity.refField : identity.name ]
 , string name [ identity.ID ]
 , string[] paraType [ identity .refField : object.name ] /*type 1, type 2,type N...*/
 , string[] paraName /* parameter name 1, parameter name 2, parameter name N...*/
 , string returnType [ identity.refField : object.name ] /*return type*/
 , string summery [ identity.summery ]
 , script body)
 {
 { language, translate, query, guest, "translation",
 {
               // Skill main code
               }
               }
               }
```

Where, the first column in the record is the "identity item name". The second column is the "skill name". The third column indicates that the corresponding data table targeted by the skill will be called when performing a query operation. The fourth column indicates that when the corresponding data table targeted by the skill acted as a guest, the skill is called, and the corresponding data table cannot be added, deleted, modified. The fifth column is the skill description item. And the sixth column is the skill main code item. During the running of the program, if the data table acted as the guest to call the "interpretation" (translation) skill of the "language item" identity, the system will find this record and interpret and execute the skill main code in the sixth column, and then complete the skill call.

### 7. Identity item scene.

The identity item, the scene, and the meaning of the identity item represented in the scene (described in the form of an expression, which will be interpreted by the system) are defined in the identity scene table. Take the definition of the "master table" identity item identity scene as an example:

```
 system sheet identity.scene (
 string iName [ identity.refField : identity.name ]
 , string sName [ identity.refField : scene.name ]
 , script isWho
 , string summery [ identity. summery ] )
 {
 { master, database, datatable, "master table" }
 { master, client, [ host:object.grad, guest:object.popupList ], " When the grid control acts as
 the host, and the popup window acts as the guest" }
 { master, browser, [ host:object.grad, guest:object.popupList ], " When the grid control acts
 as the host, and the popup window acts as the guest" }
 { master, pad, [ host:object.grad, guest:object.popupList ]," When the grid control acts as the
 host, and the popup window acts as the guest" }
 { master, mobile, [ host:object.grad, guest:object.popupList ], " When the grid control acts as
 the host, and the popup window acts as the guest" }
 }
```

Where, the first column in the record is the "identity item name"; the second column is the "scene name" (for details, please see the description in "Scene Data Type"); the third column indicates the meaning of the identity item in the corresponding scene (described in the form of an expression, which is interpreted by the system); the fourth column is the "description item". During the running time of the program, the system will convert the data table that possesses the identity item according to the given identity item and the scene. Taking the above identity item as an example, the master table in the database is used as a data table, in the client-end, browser-end, tablet-end, and mobile-end, if it is displayed in the form of main interface, as a grid control, if it is called as a guest, as a popup window.

### 8. Identity item action

The "Employees Information Sheet" in the following example is referenced here:

```
 data sheet employees[ identity .master](string ID, string NO, string name, string pwd ,string
 email, datetime entryDt, datetime dt)
 {
 }
```

### 1). Action item definition

The identity action items are defined in the identity action table, taking the definition of the ction item "insert" as an example:

```
 system sheet identity.action [ identity.detail, role.masterDetail.detail ](
 string belong [ identity .refField : identity.name ]
 , string name [ identity.config : config.data.flow.reference ]
 , string summery [ identity. summery ] )
 {
 { table, insert, "addition" }
 }
```

The first column in the record is the "identity item name", the second column is the "action item name", and the third column is the "description item". It can be seen that the "insert" action item belongs to the table item identity, so all the children that inherit the table item identity can use the action item.

### 2).Usage of action items

Taking the above action item as an example, its usage as follows:

```
 identity.table.insert.insertFlow
```

Where, the part before "insertFlow" is used to specify the action item, and "insertFlow" is used to complete the data flow operation in the action item (please see the Realization of the data flow data type).

### E. Realization of relation item (relation type)

### 1. Definition of relation item

Relation items are divided into "table relation items" and "field relation items", where the table relation items are suitable for two or multiple tables, while the field relation items are suitable for two or multiple fields within one table. The relation items are defined in relation table including: which members are included in the relation, the constraints for each member, defined in the relation details table.

The following is the definition of the relation item in the relation table:

```
 system sheet relation [ identity.master, role.masterDetailSlavery.master ] (
 string name [ identity.ID, role.valueDisplay.value ]
 , string summery [ identity.summery, role.valueDisplay.display ] )
 {
     //Table relation item
     { recordToField, "record actualization" }
 ....
     //field relation item
     { partner, "partner" }
     ........
  }
```

Where, the first item is the "relation name"; the second item is the "description item". The following is definition in the relation details table corresponding to the relation table:

```
system sheet relation.detail [ identity.slavery, role.masterDetailSlavery.slavery ] (
 string rName [ identity.refField : relation.name ]
 , string member [ identity.slaveryID ]
 , string csName [ identity.refField : identity.name ]
 , string summery [ identity. summery ] )
 {
     //table relation item
     { recordToField, recordToField.record, csTable, "record table" }
               { recordToField, recordToField.actualize, csTable, "actualization table" }
     .......
     //field relation item
               { partner, partner.A, csField, "field A" }
               { partner, partner.B, csField, "field B" }
               .........
 }
```

Where, the first item is the "relation item name"; the second item is the member of the "relation item"; the third item is the constraint for each member (the table relation item member must be a table, the field relation item member must be a field); the fourth item is description item.

### 2. The usage of the relation item

The usage of relation item is to add a relation item into the "[]" after the table name or the field name in the form of "relation.relationItemName.relationItemMember". Taking the usage of the relation item in the following Table A and Table B as an example:

```
 System sheet A [ relation.recordToField.record ] (
 string f1 [ relation.partner.A ]
 , string f2 [ relation.partner.B ] )
 System sheet B [ relation.recordToField.actualize ]
```

### 3. Relation item scene

The relation item, the scene, and the meaning of the relation item in the scene (described in the form of an expression, which is interpreted by the system) are defined in the relation scene table. Taking the definition of the relation scene of the relation item "master table, extension table" as an example:

```
 system sheet relation. scene (
 string rName [ identity .field : relation.name ]
 , string rSence [ identity.refField : sence.name ]
 , script exp /* Relation expression */
 , string summery [ identity. summery ] )
 {
 { masterExtend, database, one_to_one at least one ; all: solo, "one-to-one, at least one " }
 { masterExtend, client, design config click refresh, "click the master item to refresh the
 related items" }
 { masterExtend, browser, design config click refresh, "click the master item to refresh the
 related items" }
 { masterExtend, pad, design config click refresh, "click the master item to refresh the related
 items" }
 { masterExtend, mobile, design config click refresh, "click the master item to refresh the
 related items" }
 }
```

Where, the first item is the "relation item name"; the second item is the scene corresponding to the relation item; the third item is the meaning of the relation item in the corresponding scene (described in the form of an expression, which is interpreted by the system); the fourth item is the description item. During the running time of the program, the system will associate the multiple data tables with this relation item according to the given relation item and scene. Take the above relation items as an example, the relation items acted as the master table and the extension table in the database, which can meet the condition of "one-to-one, at least one", and can fulfill "click the master item to refresh related item" in the client-end, browser-end, tablet-end and mobile-end.

### F. Realization of role item (role type)

### 1. Definition of role item

The role items are defined in the role table, including: which members are included in the role, the identity of each member, the relation of each member, defined in the role details table, and the role item must be established on the basis that the identity item and the relation item are both clear (Refer to the description in "Role Data Type").

The following is the definition of the role item in the role table:

```
 system sheet role [ identity.master, role.masterDetailSlavery.master ] (
 string name [ identity.ID ]
 , string rName [ identity.refField : relation.name ]
 , string summery [ identity. summery ] )
 {
               { valueDisplay, partner, "Value item, Display item" }
               { recordActualize, recordToField, "Dictionary Record Table, Actualization
               table" }
  ......
               }
```

Where, the first item is the "role name"; the second item is the "relation name"; the third item is the "description item".

The following is the definition of role detail table corresponding to the role table:

```
 system sheet role.detail [ identity.slavery, role.masterDetailSlavery.slavery ] (
 string roName [ identity .refField : role.name ]
 , string name [ identity.slaveryID ]
 , string iName [ identity .refField : identity.name ]
 , string rName [ identity .refField : relation.detail.member ]
 , string summery [ identity. summery ] )
 {
 { recordActualize, record, dictionaryRecord, recordActualize.record, "Dictionary Record
 Table" }
               { recordActualize, actualize, actualize, recordActualize.actualize ,
               "Actualization Table" }
               { valueDisplay, value, ID, partner.A, "Value Item" }
               { valueDisplay, display, summery, partner.B, "Display Item"}
  }
```

Where, the first item is the "role item name"; the second item is the member of the role item; the third item is the identity constraint of the role item member. For example, the identity of "record" member of the "recordActualize" role item must be "dictionaryRecord". The fourth item is the relation constraint of the role item member. For example, the "record" member of the "recordActualize" role item is corresponding to the "record" member in the "recordToField". And the fifth item is the description item.

### 2. The usage of the role item

The usage of role item is to add a role item into the "[]" after the table name or field name, in the form of "role.roleItemName.memberName". Take the table A and table B as an example:

```
System sheet A [ role.recordActualize.record ] (
 string f1 [ role. valueDisplay.value ]
 , string f2 [ role.valueDisplay.display ] )
 System sheet B [ role.recordActualize.actualize ]
```

### 3. Role item skill

The role item includes the skill item, and the corresponding relation between the role item and the skill item is defined in the role skill table.

The following are definitions of the general skill item of all the role items:

```
 {AVG, "find the average of the corresponding table"}
 {sum, "find the total of the corresponding table"}
 {max, "find the maximum of the corresponding table"}
 {min, "find the minimum of the corresponding table"}
 {count, "find the number of the corresponding table"}
```

Where, the first item is the skill name; the second item is the description item. Once the role item has been instantiated, the data sheet can use above these general skills.

### The realization of Project Creation

Each time when a project is generated, two corresponding tables are created to save the user's settings for the newly created project. A system table named "project" is used to save the category of the project; a system table named "project.config" is used to save the system configuration of the project that created by the user.

```
 system sheet project(
       string name [Identity item],
       string summary [Identity item]
       )
       {
 ...
       {singleClient, "Single Client-end Project"},
       {clientServer, "Client-end Server-end Project"}
       ...
 }
```

The master table of the project is stored in the system sheet named "project". The content in "[]" is the reference information of "identity item, role item". For the description of "identity item and role item", please see the "Identity Item and Role Item" section of this document. The content inside of "()" is the header of the system table. The first item is the string type "name item", which is used to determine which type the item belongs to. The second item is the string type "summary (description) item", which is used to describe the specific content of project represented by the "name item".

```
 system sheet project.config(
       string pName [identity.refField: project.name],
       string sName [identity.refField: sence.name],
       string defaultDevelop [identity.refField: reserve.language],
       string licence [identity.refField: reserve.config],
       string summary [identity.summary]
       )
       {
 ...
       {singleClient, database, sqlServer, design, "MS SQL Server"}
       {clientServer, database, sqlServer}
       ...
 }
```

The configuration table of project is stored in the system sheet named "project.config". The content in "[]" is the reference information of "identity item, role item". For the description of "identity item and role item", please see the "Identity item and Role item" section of this document. The content inside of "()" is the header of the system table. The first item is the string type "pName" (project name) item, used to describe the name of the project. The second item is the string type "sName" (scene name) item, used to describe which scene (database, client or server) the project is applicable to. The third item is the string type "defaultDevelop" (default development language) item, used to describe the project is developed by which default language. The fourth item is the string type license (constraint) item, used to describe what kind of restrictions the project is subject to. The fifth item is the string type "summary" (description) item, used to describe the specific implementation language of the project.

### G. Realization of Data flow data type

Here is a data table named "employees" (for an example)

```
       data sheet employees[ identity .master] (
       string ID
       ,string NO
       ,string name
       ,string pwd
       ,string email
       ,datetime entryDt
       ,datetime dt
 ){ }
```

Below is the configuration data source table: config.data.source

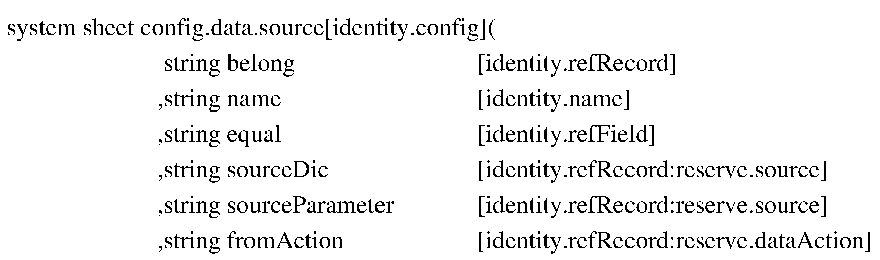

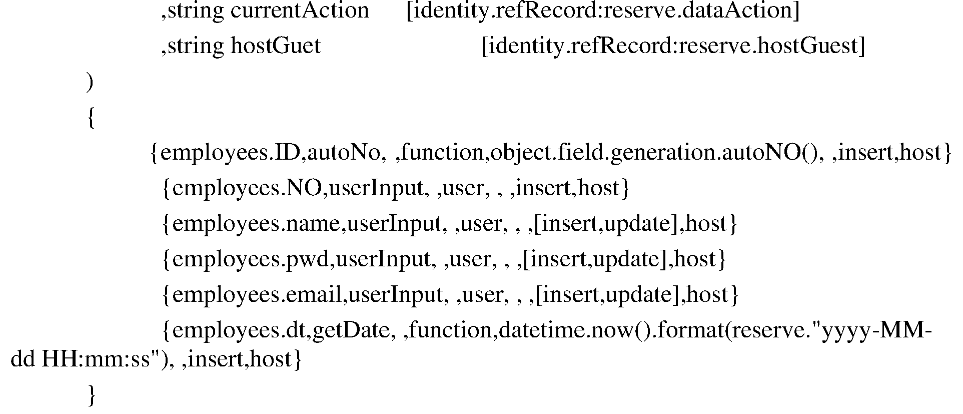

In the data source table "config.data.source", the "belong" item represents for which item it is configured. The "name" item is the name of the flow. And the "equal" item is mainly used for virtual table items. For example, if the flag bit is 1, it is from table A, while the flag bit is 2, it is from table B, etc. (If this item is not available, it will be null). The "sourceDic" item describes the data is from classification dictionary name, which must be from "reserve.source", "reserve.source" is the source item in the reserve details table. The "sourceParameter" item describes the data is from parameter value. If the parameter is a function, the address and name of the function are indicated. If the parameter is a field, the specific table name and the field name of which are indicated. If the parameter is a record, the library name, table name and record ID of which need to be indicated. The "fromAction" item indicates the source action, which must be from the table: "reserve.dataAction" (If this item is not available, it will be null), in other words, this item indicates that the source action is legal only under the condition of the source action of the flow is conformed to the predefined definition of this item. The "currentAction" item is similar to the previous item. Only for the current action when the host is acted as the host or the Guest is acted as the guest, that is, it is called by the master interface or other interface.

Data flow type table: config.data.flow:

```
       system sheet config.data.flow [ identity.table ](
       string NO[identity.ID]
       , string belong [ identity.refTable ]
       ,string action[identity.refRecord:reserve.dataAction]
       ,string summery [ identity.summery ]
       ,string[] body[identity.refField:dataSource.name]
        )
       {
                       {employeesInsert, employees ,insert, "add data in employees table " ,
                               {
                                       employees.ID:autoNo,
                                       employees.NO:userInput,
                                       employees.name:userInput,
                                       employees.pwd:userInput,
                                       employees.email:userInput,
                                       employees.dt:getDate
  }
                       }
                       { employeesUpdate , employees ,update, "update data in employees
                       table" ,
                               {
                                       employees.name :userInput,
                                       employees.pwd:userInput,
                               } employees.email:userInput
                       }
                       }
                       { employeesDelete , employees ,delete, "delete data from employees
                       table" ,
                               {
                                       //employees.ID.autoNo
                                       }
             }
 }
```

In the data flow table "config.data.flow", the "NO" item is the serial number, the "belong" item is the source, and the "action" item is the "current action dictionary item" (if it is not restricted, it is null), it must be from "reserve.dataAction", the "summery" item is the description item, and the "body" item is the specific content of the flow.

Data flow reference table or call table:config.data.flow.reference:

```
       system sheet config.data.flow.reference [ identity.table ](
        string belongFlow [ identity.refField:flow.NO ] //data flow
       ,string belongTo [ identity.reference ] //for which this data flow is configured.
       ,string belongFrom [ identity.reference ] //specify the data source address of the data
       to be configured
        )
       {
               {employeesInsert,employees,identity.table.insert}
 }
```

The "belongFlow" in the "config.data.flow.reference" table comes from the "flow.NO" item, indicating which data flow; the "belongTo" item indicates for which this data flow is configured; and the "belongFrom" item indicates the data source address of the data to be configured. Take the record in the table as an example : "{employeesInsert, employees, identity.table.insert}".

### H. Realization of "Config" Configuration data type

1. The "config.data.guide" table is a configuration parameter guide table. This item is a template constraint item that is configured for types, or a source item of a configuration parameter, where a table, a library, a field, or a record item can be configured. The item set in this table is a template constraint item, which declares the scope of the configuration. The details of the table are as follows:

   ```
system sheet config.data.guide(
string belong [identity.refRecord:reserve.config]
,string name [identity.name]
,string range [identity.reference]
,string constraint[identity.refTreeRecord:reserve.constraint]
,string poser [identity.refTreeRecord:identity.everyone]
,string vertify [identity.vertify]
,string summery [identity.summery]
)
{
{database,name,string,must,install,{vertify.string.Variable},"The name in the
third-party database, this item is configured by the user with installation level or above."}
{database,IP,string,must,install,{vertify.string.IP},"IP address, this item is
configured by the user with installation level or above."}
{database,user,string,must,install,{vertify.string.Variable},"user name, this
item is configured by the user with installation level or above." }
{database,password,string,must,install,{vertify.string.password},"password,this item
is configured by the user with installation level or above."}
//Configuration field item
{field,summery,string,option,design,{vertify.string.length128},"Description
item"}
{field,dbName,string,must,design,{vertify.string.Variable},"Field name in the
database "}
{field,dbDataType,string,must,design, {vertify.string.Variable} ,"Field type in
the database"}
{field,dbDefaultValue,string,option,design,{}," Field defaults in the database"}
{field,dbPrimaryKey,bool,must,design,{ }," Whether the current field of the
database is a primary key"}
{field,UIName,string,must,everyone,{vertify.string.length128}," The name
displayed in the user interface"}
{field,UIEditName,string,option,everyone,{vertify.string.length128},"The
name displayed in the user interface edit area"}
{field,UIViewName,string,option,everyone,{vertify.string.length128},"The
name displayed in the user interface display area" }
{field,UIParameterName,string,option,everyone, {vertify.string.length128},"The name
displayed in the user interface parameter area"}
//Configuration table item
{table,summery,string,option,everyone,{vertify.string.length128},"Description
item"}
{table,UIName,string,option,everyone, {vertify.string.length128}," The name
displayed in the user interface"}
}
```

   Where, the "belong" is from the record item in the "reserve.config" table, the "name" is the current record name, and the "range" is the item scope. The "Constraint item" is the constraint of "reserve.constraint", indicating if it is required or it is optional. The "poser" describes the configuration permission item, which comes from the "identity.everyone" item and its children items in the identity system table. The "verify" item is the verification item, comes from the "verify" type table and the detail type item of the system, and the "summery" is the description item of the record.
2. Configuration detail item table. Take the field items in the data table "employees" as an example, the configuration table "config.data" is the actualization table of the configuration guide item "config.data.guide", as follows:

   ```
system sheet config.data(
string name [identity.reference]
,string belongConfig [identity.refRecord:reserve.config]
,string belongGuide [identity.refField:config.data.guide]
,string value [identity.parameter]
)
{
//field
//configuration example
{employees.ID,field,summery,"auto numbering"}
{employees.ID,field,dbName,ID}
{employees.ID,field,dbDataType,{reserve.developer.sqlServer:int}}
{employees.ID,field,dbDefaultValue, }
{employees.ID,field,dbPrimaryKey,true}
{ employees.ID,field,UIName,"numbering" }
{employees.ID,field,UIEditName,"auto numbering"}
{employees.ID,field,UIViewName,"auto numbering"}
{ employees.ID,field,UIParameterName,"auto numbering"}
//field
//Input date
{employees.entryDt,field,summery,"input date"}
{ employees .entryDt,field,dbName,ID }
{employees.entryDt,field,dbDataType,datetime}
{ employees.entryDt,field,dbDefaultValue,
{datetime.now().format(reserve."yyyy-MM-dd HH:mm:ss")}}
{ employees.entryDt,field,dbPrimaryKey,true }
{employees.entryDt,field,UIName,"input date"}
{ employees.entryDt,field,UIEditName, "input date"}
{ employees.entryDt,field,UIViewName, "input date"}
{ employees.entryDt,field,UIParameterName, "input date"}
//field
// Date of Enrollment
{employees.dt,field,summery," Date of Enrollment"}
{ employees .dt,field,dbName,ID }
{employees.dt,field,dbDataType,datetime }
{employees.dt,field,dbDefaultValue, {reserve.developer.sqlServer:getdate()}}
{employees.dt,field,dbPrimaryKey,true}
{employees.dt,field,UIName," Date of Enrollment"}
{employees.dt,field,UIEditName," Date of Enrollment"}
{employees.dt,field,UIViewName," Date of Enrollment"}
{employees.dt,field,UIParameterName," Date of Enrollment"}
//Data table
//Configuration example
{employees,table,summery," employees information form"}
{employees,table,UIName,"employees information"}
}
```

Where, the "name" is the object to be configured, that is, for which it is configured, "belongConfig" is from the record item of the reserved keyword "reserve.config" which was preset by the system, "belongGuide" item is from "config.data.guide", "value" is the content item to be configured.

### I. Realization of the verification data type

The realization of the verification data type is actualized by three tables, namely the "verify" table, the "verify.detail" table, and the "verify.detail.identity" (Identity verification details) table. The "verify" table is used to store all types of verification that can be performed on different items in the system. The "verify.detail" table holds the specific method of verification and the required parameters/default values. The "vertify.detail.identity" table holds the types of verification for the identity item.

```
 system sheet vertify [identity.master, role.masterDetailSlavery.master](
       string name [identity item, role item],
       string parent [identity item, role item],
       string summary [identity item]
       )
       {
       ...
       {int, , "integer"},
       {string.IP, string, "IP address"}
       ...
 }
```

The system's verification item (check item) is stored in a system sheet (table) named "verify ". The content in "[]" is the reference information of "identity item, role item". For the description of "identity item and role item", please see the "Identity item and Role item" section of this document. The content in "()" is the detail field header of the system table. The first item is the string type "name item", used to describe what the check item is used to detect. The second item is the string type "parent (parent class) item", the parent item is used to describe what type of check this check belongs to (for example, the string type check is including whether it is too long, whether it meets the password requirements, etc.). The third item is the string type "description item", used to describe the contents of the check in language, similar to comments. The content in "{}" is a part of the record item in this table. When there is no "parent" field in a record, such as "{int, , "integer"}", then this check is just to check whether the type is correct.

```
 system sheet vertify.detail [identity item, role item] (
       string belong[identity item, role item],
       string name[identity item],
       string defaultValue [identity item],
       string summery [identity item]
       )
       {
              ...
       { int, min, -2147483648 },
       { string.password, min, 6, "minimum input"}
       ...
 }
```

The "verify.detail" table is a subordinate table of the "verify table", which is used to store the specific conditions required for each verification. The content in "[]" is the reference information of the "identity item, role item". For the description of identity items and role items, please see the "Identity item and Role Item" section of this document. The content in "()" is the detail field header of the system table. The first item is the string type "belong item", used to describe what type of check this check belongs to, corresponding to the name in the "verify table". The second item is the string type "name item", used to describe what content this check is checking (for example, "min" is to check the minimum value, and "notNull" is to check whether the item is empty). The third item is the string type "defaultValue" (default) item, used to store the default results of the check or the parameters required by the check. The fourth item is the string type "summery (description) item"; which is used to describe the specific content of the check in language, similar to the comment. The content in "{}" is a part of the record item of this table.

```
 config sheet vertify.detail.identity(
 string belong [identity.refRecord: identity .field],
 string name [identity.refField: vertify.detail.name],
 string defaultValue,
 string poser [identity.config: identity.everyone]
 )
 {
       ...
       {ID, int.min, 1, everyone}
       {NO, int.min, 1, everyone}
       ...
       }
```

The "verify.detail.identity" table is a table specifically designed to check whether the configuration parameters of the identity table are reasonable. The content in "[]" is the reference information of the "identity item, role item". For the description of "identity item and role item", please see the "Identity item and Role item" section of this document. The content in "()" is the detail field header of the system table. The first item is the string type "belong" item, indicates which configuration of the identity table is checked by the check item. The second item is the string type "name" item, indicates what content the check item specifically checks (such as whether it is empty, whether the number is out of range, etc.). The third item is the string type "defaultValue" (default) item, used to save the default results of the check or the parameters required for the check. The fourth item is the string type "poser" (publisher) item, which is used to describe what type of user can perform this check on the identity table. The content in "{ }" is a part of the record item of this table.

### J. Realization of the new Grad Grid Control Data Type

The grad new Grid control data type is realized by "ctrol.grad" in the control data type stored in the object table. After the grad data type is created, the user can generate it as a graphical interface for operation. The graphical interface includes view (display) area, edit area, query (search) area, list (detail) area, and each area contains the controls that possessed by the system.

```
 { ctrol.grad , ctrol , inherit, "grid control" , class }
 { ctrol.grad.list , ctorl.grad , include , "list area" , class }
 { ctrol.grad.edit , ctrol.grad , include ,"edit area" , class }
 { ctrol.grad.query, grad, include , "query area" , class }
 { ctrol.grad.view, ctrol.grad , include , "view area" , class }
```

The "Ctrol.grad" is the data type that possessed by the system. For the realization of the system data type, please see the "Realization of Object" section of this document. Its parent type is the control type, the relation between "Ctrol.grad" and its parent is "inherit" and the type is a class. "Ctrol.grad" includes four components: The first component is the "ctrol.grad.list area", its parent type is "ctrol.grad" (grid control type), and its relation with its parent is "including" ("include") and it is a class type. The "list area" is located in the center of the entire grad interface, which includes a table-type data table for displaying data in the form of tables. The second component is the "ctrol.grad.edit area", its parent is "ctrol.grad" (network control type), and its relation with its parent is "including" ("include") and it is a class type. The "edit area" is located at the bottom of the entire "grad interface" and under the "view area". The "edit area" includes many labels (label controls, used to display the name of the field to be edited) and many text boxes (used to input modified values by users). When the user selects a record in the "view area", the user can modify the fields of that selected record in the "edit area". The third component is the "ctrol.grad.query area" (search area), its parent is "ctrol.grad" (network control type), and its relation with its parent is "including" ("include") and it is a class type. The "query area" is at the left end of the entire "grad interface". The "query area" includes many labels (label controls, used to display the name of the field to be edited) and many text boxes (used to input the value by the users that they want to query), and label control specifically used to query the date. Users can set search items in the "query area". After inputting the search items, users can search the corresponding fields in the records in the "display area" to obtain the search results. The fourth component is the "ctrol.grad.view area" (display area). The view (display) detail area includes many labels (label controls, used to display the contents of the records currently selected in the "display area" in form of one-to-one correspondence between the header and the field).

### K. Realization of Global Access

The realization of "Global access" is actualized through the index tables. "Global access" means that after a user declares a variable and assigns an object type and identity to the variable, the system can bind the corresponding table of the object type and identity of the variable directly to the variable itself, so that the variable can directly call its affiliates such as its type, its identity method, etc.

```
 system sheet index(
 string name[identity.ID],
 string ref[identity.reference]
 )
 {
       ...
       {long, object.long},
       {double, object.double}
       }
```

The global index of the system is stored in a system sheet named "index". The content in "[]" is the reference information of "identity item, role item". For the description of "identity item and role item", please see the "Identity item and role item" section in this document. The content in "()" is the details field header of the system table. The first item is the string type "name item", used to store the various types that possessed by the system and configuration-level identity of global users. The second item is the string type "ref (reference) item", used to store the index of object/identity corresponding to each name item. Through the index, the table where the object/identity is stored can be searched and found, and then you can reference the method parameters etc within the table.

The above description is only one of the preferred specific embodiments of the present disclosure, and is not intended to limit the present disclosure. Any modification, equivalent replacement and improvement made within the spirit and principles of this disclosure shall be included in the scope of protection of the disclosure.

### INDUSTRIAL APPLICABILITY

The present invention is applicable to all industries and all walks of life which are involving with data production, data manufacture, data flow, data exchange, data transformation, data conversion, data transmission, data storage, data management, data mining, data analysis, data operation, data process, data security, data utilization, data service and so on.

## Claims

1. A new programming language, wherein the method of object creation in this language is to use "table" data type to create and to describe object, comprising:
object name, inheritance relation/containment relation, description etc., are recorded and described by an "object" table of the system;
object attribute, comprising object attribute name, class, features etc., are recorded and described by an "object.attribute" table;
operations of object table and operations of "object.attribute" table, are recorded and described by an "object.state" table.

2. The new programming language of claim 1, wherein "METHODS" in this language are recorded and described through table data type, METHODS table of the system table in this language is used to record the object which the method belongs to, method name, method parameter, method type, method body, method description, etc. in the system.

3. A new programming language, comprising: identity item (identity type), relation item (relation type), role item (role type).

4. The new programming language according to claim 3, wherein the identity item (identity type) and the realization method of identity item (identity type), comprising:
definition of identity item, identity items are defined in the identity table in the form of tree structure, wherein children items can inherit parent items, users can expand the identity table dynamically as needed, but the custom-defined identity items must inherit from system-defined identity items;
usage methods of Identity item, there are two methods of identity items usage: 1. Add an identity item to "[]" after table names or field names, and 2. Configure identity items directly in the identity configuration table;
construction of identity item, construction items are defined in the identity construction table, wherein all of the system-defined identity items or user-defined identity items must be clearly defined with corresponding construction items, if the child item is defined the same construction item as the parent item, then the child item will override the same item (items) in the parent item, the construction item configuration is in the identity composition configuration table;
identity item check, the identity item check is completed by a script, wherein the corresponding relation between identity item and script is defined in the identity check table, the system-defined identity item will be checked by the script within the system, the identity item added by the user will be checked by the corresponding check script which needs to be written by the user;
identity item instantiation, the process of identity item instantiation comprises three steps: 1). source check: to verify whether the identity item and its parent item are defined in the identity table, then to verify whether the root item is correct (The identity root item of table must be a table item, the identity root item of field must be a field item); 2). constructions item check: to verify whether all required options in construction item which is included within the identity item are configured; and 3). script check: to verify whether each construction item meets the identity constraints and role constraints;
identity item skill, the corresponding relation between the identity item and the skill is defined in the identity skill table, in addition, it also has been defined in the table that under which action the skill is called and in what identity (here the identity refers to the master identity or the guest identity) the skill is called; the child contains all the skills of the parent;
identity item scene, identity item, scene, and the meaning (described in the form of an expression, which is interpreted by the system) represented by identity item in this scene are defined in the identity scene table;
the action of identity item, identity action item is defined in the identity action table, wherein the data flow can be manipulated by using the identity action item.

5. The new programming language according to claim 3, wherein the relation item (relation type) and the realization method of relation item (relation type), comprising:
relation item definition and usage, relation items are defined in the relation item table: which members are included in the relation and the constraints condition of each member, are defined in the relation details table;
relation item usage, the relation item usage method is "relation.relationItemName.memberName";
relation item scene, relation item, scene, and the meanings represented by identity item in this scene (described in the expression form, interpreted by the system) are defined in the relation scene table.

6. The new programming language according to claim 3, wherein the role item (role type) and the realization method of role item (role type), the role item needs to be established on the basis of specific identity item and specific relation item, comprising:
role item definition, role items are defined in the role item table: which members are included in the role, and the identity and relation of each member are defined in the role details table;
role item usage, the usage method of role item is "role.roleItemName.memberName";
role item skill, the corresponding relation between role items and skills are defined in the role skill table.

7. A new programming language, wherein realization methods of verification data type, comprising:
verification (check) item name, verification (check) item parent name and verification (check) item description are record by a verify table;
verification (check) item affiliation, verification (check) item name, verification (check) item default/parameter and verification item (check) description, are record in the verify.detail table;
verification (check) table of the identity table, comprising: the identity check (verification) affiliation, the name item of identity check (verification), the default value item of identity check (verification), the publisher item of identity check (verification).

8. The new programming language of claim 7, further comprising: A method of using tables to store the parameters and affiliation etc required for type checking (verification), and through the name field to indicate what kind of checking (verification) it is, and to facilitate for correlating tables.

9. A new programming language, wherein a method of quick global access: The type objects stored in a fixed table named "index" in the system of this language can be accessed globally, comprising the type name items, type reference items.

10. The new programming language of claim 9, further comprising: By putting the types of the index table and the indexes of the table where the actualization method is stored into one table, through which the users can directly complete some types of quick global access.

11. A new programming language, wherein a realization method of "grad" data type, through the data type named "grad" which has realized visualization grid space, comprising: display area; edit area; query area, list area, and graphic area.

12. The new programming language of claim 11, further comprising: A realization method of collaboration which actualized by the display area, edit area, query area and list area in the visualization grid space together, and through the collaboration users can operate data by using a graphical interface.

13. A new programming language, wherein the composition of language comprises various series of system tables data type.

14. The new programming language according to claim 13, wherein the system table data type is modified by system keyword, the system table structure is composed in sequence by: table name, supplementary specification in the brackets "[]", table field in the parentheses "( )", table record item in the curly braces " {}".

15. The new programming language according to claim 13, wherein if the brackets "[]" follow after the table name or field item, then the contents inside the brackets "[]" are the identity item (identity type), relation item (relation type) and role item (role type) of table or field.

16. A new programming language, wherein a realization method that the system tables data type can be converted into data tables data type and be added to the database at runtime.

17. A new programming language, wherein a realization method that the cache table is used as a temporary storage to store data from other tables.

18. A new programming language, wherein a realization method of configuration: the config configuration table is implemented to configure for other tables, libraries, fields or record items.

19. The new programming language of claim 18, further comprising: permissions in configuration data type are divided into five permission levels from high to low, comprising: Designer permission, Tester permission, Installer permission, User permission and Everyone permission.

20. The new programming language of claim 18, further comprising: a naming method of the configuration table is named in the form of tree structure, through the method of adding the original table name into the configuration table, wherein for different types of tables, libraries, fields, record entries, the corresponding configuration tables of which are different.

21. The new programming language of claim 18, further comprising: a method of identifying configuration tables, wherein through the "belong" item in table header, the configuration table can identify this table configured by which table.

22. The new programming language of claim 18, further comprising: each configuration table has its corresponding name and description field, wherein for configuration tables that belong to different tables, the other fields in the configuration table can be different.

23. A new programming language, wherein a realization method of "data flow" data type, the data flow data type defines the whereabouts, traces and sources of data.

24. The new programming language of claim 23, wherein a configuration method of data flow data type: the data flow is configured to a data table through the method of configuration by the configuration table.
